# FASCICULE DE BREVET EUROPEEN

(11) **EP 0 520 928 B1**
(45) Date de publication et mention de la délivrance du brevet: **18.12.1996**
(21) Numéro de dépôt: 92480090.7
(22) Date de dépôt: 23.06.1992
(51) Int. Cl.: B60G 17/00, B60G 15/06, B60G 11/32, F16F 13/00

(54) **Suspension pour véhicules utilisant deux raideurs, destinées respectivement à l'obtention d'un bon niveau de confort et d'un bon niveau de comportement**
Fahrzeugaufhängung, bei der zwei Steifigkeiten benutzt werden, eine für ein gutes Niveau des Komforts und die andere für ein gutes Niveau des Fahrzeugverhaltens
Vehicle suspension having two stiffnesses, one for obtaining a good level of comfort and the other for a good level of vehicle alignment

(30) Priorité: 24.06.1991 FR 9107847
(43) Date de publication de la demande: 30.12.1992
(73) Titulaire: MAURO BIANCHI S.A., F-92800 Puteaux (FR)
(72) Inventeur: Bianchi, Mauro, F-83310 La Garde Freinet (FR)
(74) Mandataire: Hautier, Jean-Louis

(56) Documents cités:
- WO-A-91/04876
- BE-A- 903 212
- DE-B- 1 505 454
- DE-U- 1 757 467
- GB-A- 496 980
- GB-A- 1 401 988
- GB-A- 2 164 417
- US-A- 4 273 317
- PATENT ABSTRACTS OF JAPAN vol. 9, no. 300 (M-433)(2023) 27 Novembre 1985 & JP-A-60 136 635 (SHIYOUWA SEISAKUSHO) 20 Juillet 1985

## Description

Suspension pour véhicules utilisant deux raideurs, destinées respectivement à l'obtention d'un bon niveau de confort (faible raideur) et d'un bon niveau de comportement (forte raideur).

La forte raideur est utilisée en course de détente et en course de fin de compression.

La faible raideur est utilisée en course de compression dans une zone délimitée réglable lorsque le véhicule est en roulage ; ce réglage pouvant être manuel ou automatique.

*L'état de la technique peut être défini par les brevets suivants :*
- *FR-A-89.06533 du 16.5.89 déposé par la S.A. MAURO BIANCHI: "Procédé de suspension à double flexibilité pour, notamment, des véhicules automobiles du type consistant à disposer le châssis du véhicule automobile en "sandwich" entre deux suspensions disposées en opposition, l'une classique, dite suspension à flexibilité "négative", l'autre dite suspension à flexibilité "positive", la suspension à flexibilité "positive" est montée en opposition à la flexibilité "négative" caractérisée par le fait que ladite suspension est pourvue de moyens de réglage, lesdits éléments élastiques "négatif et positif" sont réglés suivant les besoins de la mise au point, avec une précontrainte nulle ou, encore, avec une certaine garde ; le choix de la précontrainte des éléments élastiques de flexibilité "négative et positive" devient ainsi un* *élément de réglage de cette suspension."*
- *FR-A-89.13240 du 5 octobre 1989 déposé par la S.A. MAURO BIANCHI : "Procédé de suspension de roue de véhicule utilisant un ou plusieurs éléments élastiques montés en opposition l'un par rapport à l'autre dans le cas où il y a plusieurs éléments élastiques, dans le cas d'un seul élément élastique au moins une butée limite le fonctionnement sur une seule portion dudit élément caractérisé par le fait qu'il imprime à la suspension de chacune des roues du véhicule une variation de raideur ou de flexibilité à deux pentes sur la courbe (choc-détente et effort de compression), que ladite utilisation des raideurs ou flexibilités différentes s'effectue en dynamique et que le point d'inflexion de ladite courbe est localisé lors des débattements de la suspension au voisinage de la position du véhicule en charge sur roues et que la raideur la plus faible se situe sur la deuxième partie de la course d'écrasement de la suspension de roue. Le déplacement du point d'inflexion de la courbe (choc-détente et effort de compression) s'effectue par des réglages de la mise au point de la suspension, pour que ledit point d'inflexion soit au-dessus ou au-dessous de la position en charge du véhicule."*
- *FR-A-90.08859 du 6 juillet 1990 déposé par la S.A. MAURO BIANCHI : "Procédé de suspension du type utilisant une raideur plus grande dans la course se situant entre la position en "charge ordre de marche" et la position "roues pendantes" que dans la course se situant entre la position en charge "ordre de marche" et la position "suspensions écrasées" jusqu'aux butées de choc ; représenté graphiquement, le changement de raideur se traduit par une rupture de pente caractérisé par le fait qu'il utilise un moyen d'adoucissement de la rupture de la pente. Le procédé de suspension utilise un moyen de réglage pour ajuster le point de rupture de la pente lors de chacune des variations de charge du véhicule."*

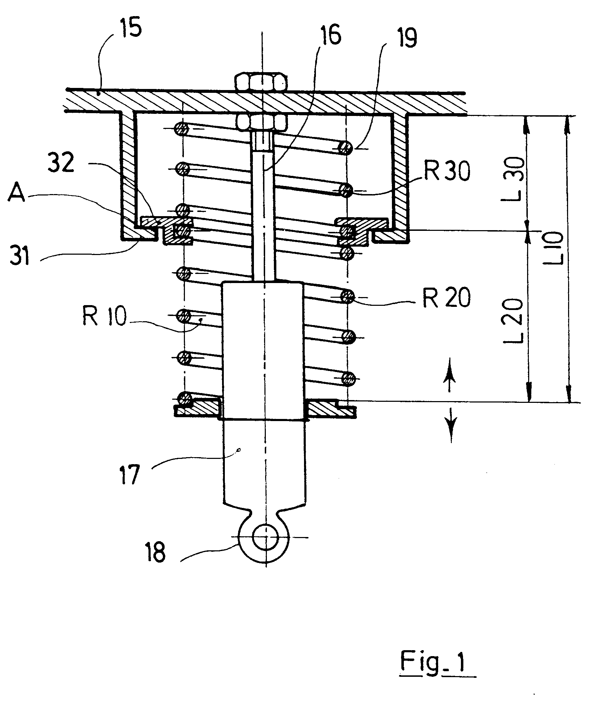

*Un des principes de réalisation du procédé de la suspension telle que décrite, notamment dans la demande de brevet n° 89.13240, du 5 octobre 1989 fait appel à la mise en oeuvre d'un ressort hélicoïdal unique sollicité au niveau d'une spire de sa partie centrale (voir la figure 1). Une partie R30 du ressort R10 est ainsi enfermée et sous contrainte entre deux appuis, tous deux solidaires du chassis 15 du véhicule. La partie R20 du même* *ressort R10 est positionnée entre la coupelle 32 solidaire d'une des spires centrales du ressort et une autre coupelle solidaire de la partie mobile de la suspension, en l'occurrence l'amortisseur 17. Lorsque le véhicule est en ordre de marche sur ses roues, le ressort reçoit une poussée correspondant à la partie du poids suspendu prise en compte par la suspension considérée. Cette poussée est voisine de celle que développe la partie enfermée R30 du ressort sur ses deux appuis. On comprend, dès lors, que par rapport à cette position médiane de la suspension qui correspond à la situation en ordre de marche du véhicule :*
*a) si la suspension est comprimée lors de la course de choc de la roue, la poussée sur l'ensemble du ressort augmente et devient supérieure à celle que développait la partie R30 du ressort sur ses appuis. La coupelle 32 se désolidarise donc de son appui 31 et le ressort travaille alors sur la totalité de sa longueur et de sa flexibilité.*
   *L'action de la suspension se situe dans la zone de plus faible raideur de la suspension.*
*b) si la suspension est détendue, la poussée sur l'ensemble du ressort décroit et devient inférieure à celle que développe la partie R30 du ressort sur ses appuis. La coupelle 32 en appui sur son siège empêche donc cette partie R30 du ressort de se détendre. Seule la partie R20 du ressort se détend. La flexibilité du ressort n'est donc que partiellement exploitée.*
   *L'action de la suspension se situe dans la zone de forte raideur de la suspension.*
   - *FR-A-829.453 : l'invention a pour objet des perfectionnements apportés aux systèmes élastiques à flexibilité-variable, notamment pour suspensions de véhicules, lesquels perfectionnements consistent, principalement, à agencer de manière telle, les systèmes du genre en question, que, pendant au moins une portion de leur course totale, une partie des moyens élastiques, notamment des ressorts qu'ils comportent, soit automatiquement empêchée de se dilater (ou de se détendre), ce qui conduit à une modification de la flexibilité.*
      *Elle vise plus particulièrement un certain mode d'application (celui pour lequel on l'applique aux systèmes élastiques pour suspensions de véhicules), ainsi que certains modes de réalisation, desdits perfectionnements ; et elle vise, plus* *particulièrement encore et ce à titre de produits industriels nouveaux, les systèmes du genre en question comportant application de ces mêmes perfectionnements, les éléments spéciaux propres à leur établissement ainsi que les ensembles, notamment les véhicules automobiles, comprenant de semblables systèmes.*
   - *US-A-3.572.678 : l'invention concerne un ensemble ressort de surcharge pour véhicule, comprenant deux ressorts à boudin ou parties de ressort interposées entre les masses suspendue et non suspendue du véhicule, l'un des deux ressorts étant plus rigide que l'autre, et les ressorts étant incapables d'assister la suspension principale dans des conditions de charge normale mais pouvant se déplacer pour servir d'appui dans des conditions de surcharge prédéfinie. Des butées associées aux ressorts et, de préférence, portées par un amortisseur situé à l'intérieur des ressorts permettent aux ressorts, quand ils deviennent efficaces, d'assurer d'abord un appui doux, puis un appui plus dur dépendant seulement des caractéristiques du ressort le plus rigide, les butées servant aussi, de préférence, à limiter élastiquement la séparation des masses suspendue et non suspendue dans des conditions de charge prolongée ou de rebond.*

La suspension de roue de véhicule comporte :
- un élément amortisseur disposé entre la roue et le châssis du véhicule ;
- un premier ressort disposé entre une coupelle et le châssis et un second ressort disposé entre ladite coupelle et la roue du véhicule ;
- une première butée supérieure et une seconde butée inférieure disposées sur le corps de l'amortisseur de façon à limiter la course de la coupelle ;
- un moyen élastique disposé entre chaque butée et la coupelle, de façon à rendre progressive l'élimination d'un des deux ressorts montés en série lorsque ladite coupelle vient se mettre en appui contre l'une des butées, la distance entre les deux butées détermine une course précise de la coupelle, ladite course définissant, sur la course de suspension, une "zone de confort" où la raideur est plus faible que sur les courses restantes ; cette suspension est
   caractérisée par le fait que :
- la seconde butée de la coupelle est montée solidaire d'une chemise mobile d'un vérin annulaire sur le corps de l'amortisseur,
- la chemise mobile est rappelée par un ressort de rappel prenant appui sur la première butée, et
- qu'une commande hydraulique actionne le vérin annulaire, la "zone de confort" étant réglable en réglant la distance entre les deux butées.

L'alimentation du vérin se fait par un canal présentant un filetage de raccordement sous la coupelle inférieure du ressort.

La commande hydraulique, qui agit sur le vérin annulaire sur lequel est montée la seconde butée, est asservie à un calculateur qui reçoit des informations de différents capteurs de pression, d'assiette, de charges de mouvement, de pression dans les freins, de volant de direction, etc...

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique de l'état de la technique tel que défini plus haut et qui représente le procédé de suspension dans le cas d'un seul élément élastique ou ressort et où l'on utilise une seule butée qui limite le fonctionnement sur une seule portion dudit élément.

La figure 2 est une vue schématique de la suspension selon la figure 1, mais où deux éléments élastiques montés en série sont utilisés. La coupelle d'appui est disposée entre les deux éléments élastiques.

La figure 3 est une vue schématique d'une suspension selon la figure 2 mais où la coupelle d'appui est montée annulaire sur le corps de l'amortisseur.

Les figures 4 et 5 sont des vues de deux suspensions où l'ensemble des deux ressorts est maintenu entre deux coupelles portées toutes deux par l'élément amortisseur.

La figure 6 est une vue schématique de la suspension selon la figure 5, mais où la coupelle d'appui est montée annulaire avec un certain jeu, de manière à être maintenue sur l'axe longitudinal de l'amortisseur par les ressorts eux-mêmes.

La figure 7 est une vue schématique de la suspension selon la figure 6, mais où la coupelle d'appui est réalisée pour deux ressorts montés en série, soit partiellement concentriques, de manière à pouvoir être mis en place sur l'élément d'un demi-train avant du type MAC PHERSON.

La figure 8 est une vue schématique de la suspension où une seconde butée ou point d'appui vient limiter la course de la coupelle lorsque celle-ci quitte son premier appui.

La figure 9 est une vue schématique de la suspension selon la figure 8 où une seconde butée au point d'appui est montée solidaire d'une chemise mobile, d'un vérin annulaire au corps de l'amortisseur de la suspension.

La figure 10 représente la courbe obtenue avec la suspension DUBONNET FR-A-829.453 et où la simulation est chiffrée.

La figure 11 représente la courbe obtenue avec la suspension selon l'invention et où la simulation est chiffrée. Elle met en évidence le premier point de basculement qui est situé au niveau de la position statique de la suspension, contrairement au brevet DUBONNET.

Dans un souci de clarté, les références qui désignent des éléments ayant la même fonction sont désignées dans le texte avec les mêmes références, par exemple : les deux éléments élastiques, la coupelle, les butées ou appuis.

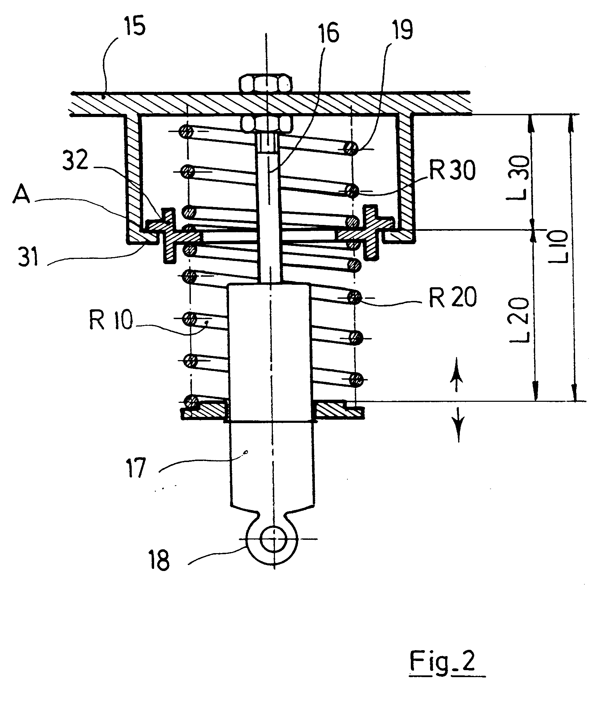

Selon un premier mode de réalisation, la suspension utilise deux ressorts R20 et R30. La coupelle 32 est disposée entre les deux ressorts (voir la figure 2).

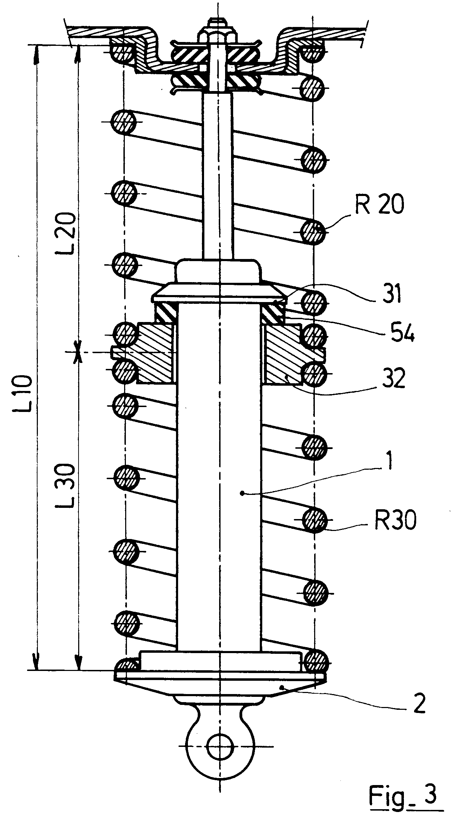

Selon un autre mode de réalisation, la suspension utilise une coupelle 32 qui coulisse sur le corps 1 de l'élément amortisseur 2 de la suspension, cet élément étant porteur de l'appui 31 qui limite la détente du ressort R30 (voir la figure 3). Dans ce mode de réalisation, on observe que le ressort R30 est passé de la situation supérieure à la situation inférieure, par rapport à l'ensemble des deux ressorts en série R30, R20.

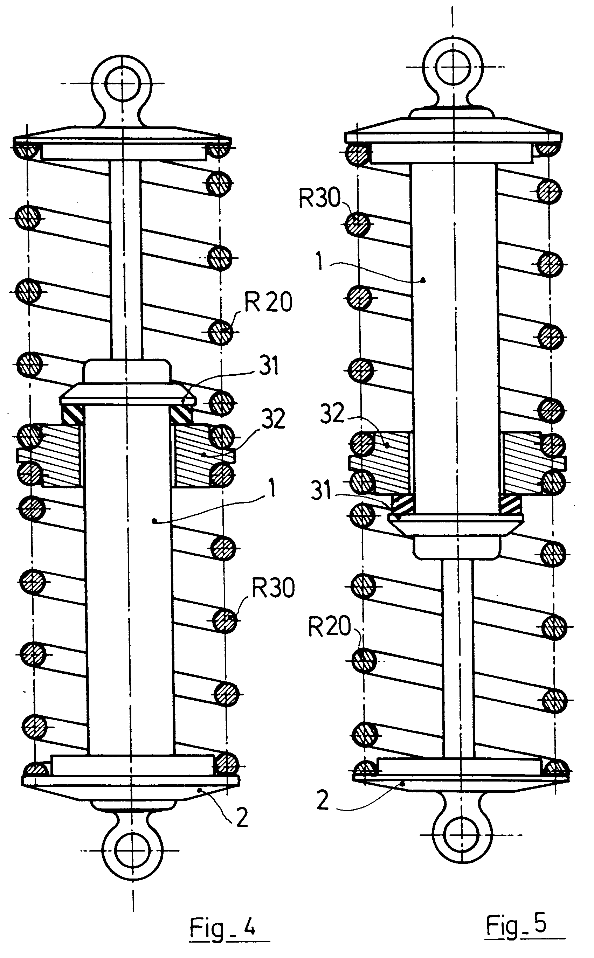

Dans une autre variante, l'ensemble des deux ressorts R30, R20 est maintenu entre deux coupelles portées toutes deux par l'élément amortisseur (voir les figures 4 et 5). Cet ensemble amortisseur 2 plus ressorts R30, R20, est alors indifféremment monté avec le corps 1 de l'amortisseur 2 solidaire de la roue ou du châssis, comme représenté dans les figures 4 et 5.

Quoique ce montage à deux ressorts en série R30, R20 soit industriellement plus simple à réaliser, il reste à déplorer la présence du guidage par coulissement de la coupelle 32 nécessitant une lubrification qu'il est nécessaire de protéger des projections engendrées par la roue du véhicule toute proche.

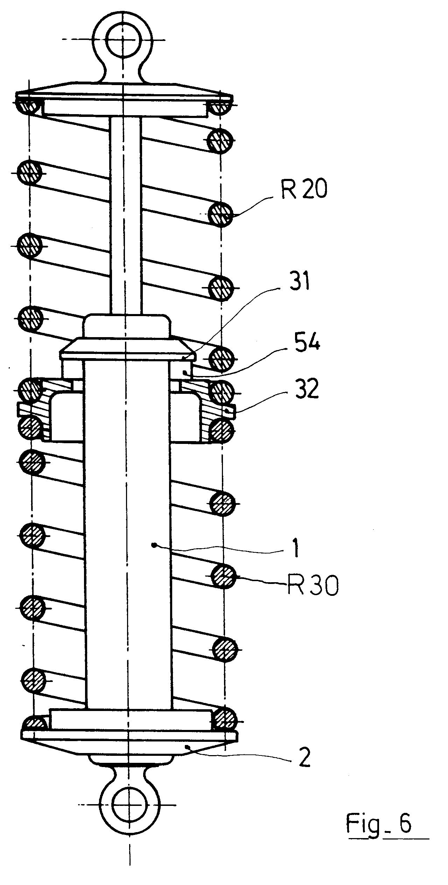

Selon un autre mode de réalisation, il est donc prévu la suppression du guidage de la coupelle qui, du même coup, peut être réalisée plus simplement (voir la figure 6). La coupelle 32 est montée annulaire sur le corps de l'amortisseur avec un certain jeu, de manière à être maintenue sur l'axe longitudinal de l'amortisseur 2 par les ressorts eux-mêmes.

La suspension selon l'invention procure un niveau de confort d'autant plus élevé que la transition d'une raideur à l'autre s'opère avec progression (se rapporter aux brevets cités dans l'état de la technique).

Un moyen élastique telle qu'une cale en élastomère 54 est donc installée, à cet effet, entre l'appui 31 et la coupelle 32 de façon à rendre progressive l'élimination de la poussée du ressort R30 lorsque la coupelle 32 vient se mettre en appui sur 31. Cette cale en élastomère 54 est représentée dans plusieurs figures.

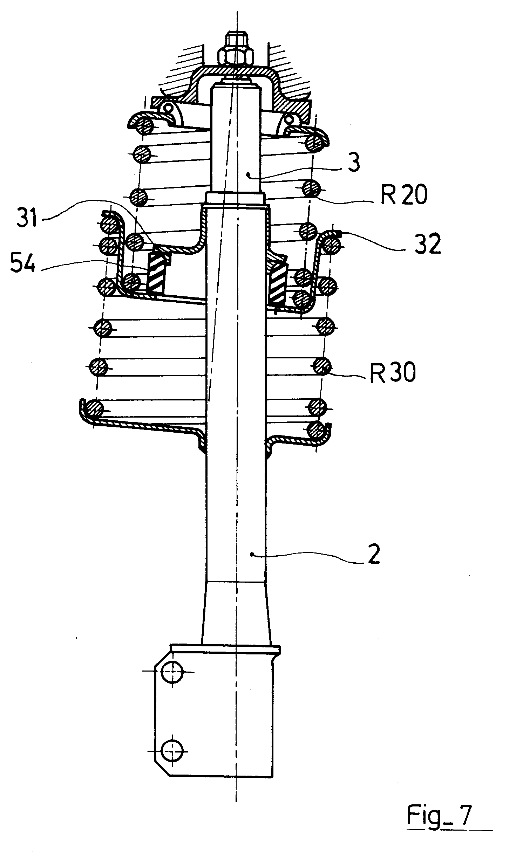

Dans le cas où le volume disponible pour implanter les deux ressorts R20 et R30 est plus favorable à des ressorts de grand diamètre, plutôt que de grande longueur. La coupelle 32 est réalisée de façon à ce que les deux ressorts R30 R20 soient partiellement concentriques, tels que représentés sur l'élément d'un demi-train avant du type Mac-Pherson (voir la figure 7). Du fait de l'inclinaison des ressorts R30 R20 par rapport à l'élément d'un demi-train avant (inclinaison destinée à limiter les efforts radiaux sur la tige coulissante 3 de la jambe), on observe un léger mouvement oblique des ressorts R30 R20 par rapport à leur axe lors des débattements. L'absence de guidage par coulissement est donc très apprécié dans ce montage où les diamètres d'enroulement des ressorts R30 R20 sont suffisamment généreux pour que des jeux notoires assurent les déplacements obliques des ressorts sans aucun risque d'interférence parasite.

### Raideur augmentée en fin de course de choc :

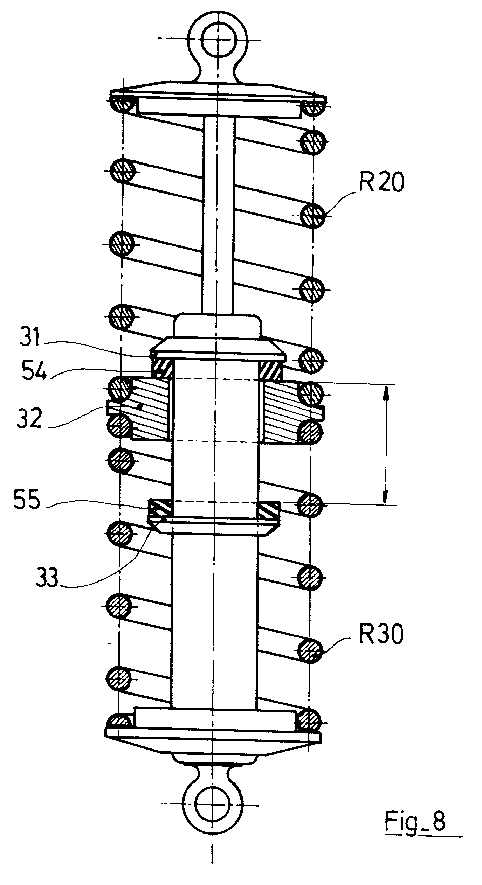

La tenue en assiette du véhicule peut encore être améliorée par un retour, en fin de course de compression, sur l'utilisation de la raideur augmentée utilisée lors de la détente. Cette amélioration est obtenue en ajoutant sur l'élément de suspension, une deuxième butée ou appui 33 venant limiter la course de la coupelle 32 lorsqu'elle quitte son appui 31 et s'en éloigne (voir la figure 8). L'action se situe alors en course de compression et les deux ressorts R30 R20 travaillent ensemble en série, offrant à cet instant la somme de leurs flexibilités jusqu'au moment où la coupelle 32 vient prendre appui sur la butée 33. La compression du ressort R30 s'interrompt alors, laissant le ressort R20 supporter seul l'accroissement de charge. La compression de la suspension se termine donc dans une zone de faible flexibilité identique à celle observée lors de la détente de la suspension au-delà de la position médiane.

L'utilisation d'une second butée ou second point d'appui 33 permet d'utiliser une seconde cale 55 en élastomère qui a la même fonction que la cale 54.

Un véhicule ainsi équipé, soumis à la forte accélération latérale engendrée par un passage en courbe très rapide, bénéficie donc, lors de son inclinaison due à la mise en appui, d'une augmentation de la raideur de ses suspensions, tant interne qu'externe au virage. La distance entre les deux butées 31 et 33 détermine une course précise de la coupelle 32, de laquelle se décline sur la course de suspension une zone de confort où la raideur est plus faible que sur les courses restantes tant en choc qu'en détente.

Il a été décrit, dans les brevets cités dans l'état de la technique, que le changement de raideur lors de la course de détente doit être positionné avec précision par rapport à la position des suspensions lorsque le véhicule est en ordre de marche sur ses roues.

Cette condition est idéalement obtenue lorsque le véhicule est équipé d'un dispositif à correction d'assiette. Dans ces conditions, la butée 31 ne nécessite aucun réglage de son positionnement autre que celui réalisé initialement lors de la mise au point du véhicule.

Par contre, le positionnement de la seconde butée 33 ou second point d'appui 33 détermine un comportement du véhicule qui doit faire l'objet d'un compromis pouvant favoriser soit le confort, soit la tenue en assiette du véhicule. On perçoit donc très bien tout l'intérêt qu'il y a à doter le positionnement de la seconde butée 33 d'un réglage en hauteur possible à tout instant.

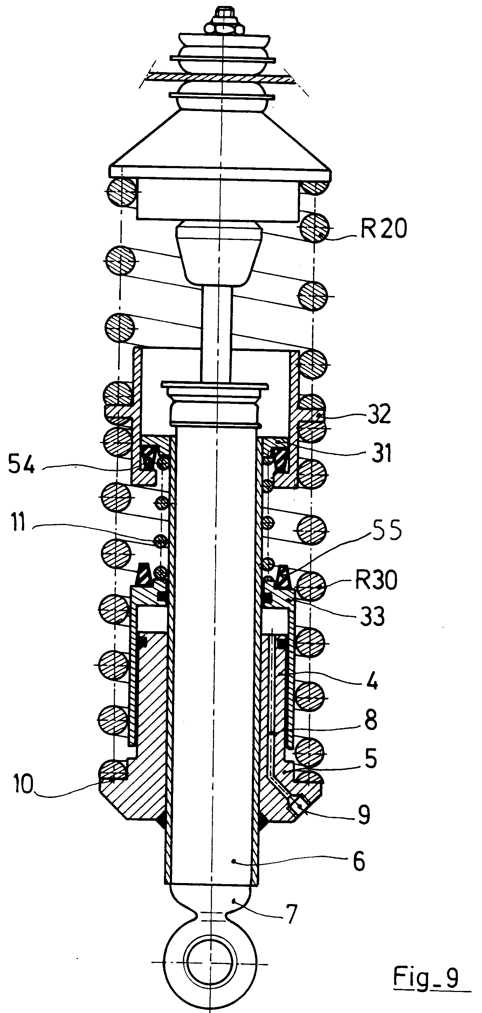

### Elément de suspension a "zone de confort" réglable (voir la figure 9)

Pour des raisons de facilité dans la description du procédé de suspension, un guidage mécanique a été conservé pour la suspension décrite dans la figure 9, mais comme expose précédemment, on s'efforcera de supprimer ce coulissement lors du passage à une réalisation industrielle.

La seconde butée 33 est disposée sur la chemise mobile 4 d'un vérin annulaire 5 au corps 6 de l'amortisseur de suspension 7. L'alimentation du vérin 5 se fait par un canal 8 présentant un filetage de raccordement 9 sous la coupelle inférieure de maintien 10 du ressort R30. Cette chemise mobile 4 est ramenée vers le bas par un ressort de rappel 11 prenant appui sur la première butée 31. La raideur de ce ressort de rappel 11 étant clairement identifiée, à des pressions données à l'intérieur du vérin 5 correspondent des hauteurs précises de la seconde butée 33. En d'autres termes, le pilotage de la seconde butée 33 se fait par celui de la pression d'huile envoyée dans le vérin 5 lorsque la coupelle 32 n'est pas en appui sur la seconde butée 33. Lorsque cette seconde butée 33 a été ainsi positionnée, il suffit de figer le volume d'huile dans le vérin 5, en fermant une électrovanne (non représentée) sur le circuit d'alimentation du vérin 5. Le conducteur du véhicule peut donc, lorsque le véhicule n'est soumis à aucune accélération, "afficher" un caractère plus ou moins sportif à ce dernier en faisant varier la hauteur des butées 33 à l'aide d'une commande hydraulique des plus simple.

### Elément de suspension a "butée pilotée"

Le même mode de réalisation peut être utilisé en combinaison avec un circuit hydraulique piloté électroniquement et fonctionnant alors, non plus en variation de pression, mais en variation de volume. Un calculateur (non représenté sur les figures) reçoit alors des informations de différents capteurs d'accélération, de mouvement ou de pression (accélérations ou décélérations longitudinales, accélérations latérales, pression dans les freins, mouvement d'accélérateur, du volant de direction, etc...).

Le calculateur en décline des instructions qu'il transmet à une centrale hydraulique qui commande alors le déplacement de la seconde butée ou second point d'appui de la coupelle 32 de chaque élément de suspension, selon que l'augmentation de raideur est souhaitée pour combattre un mouvement de roulis ou de tangage engendré par une entrée en virage, un freinage ou une sollicitation de l'accélérateur.

### DIFFERENCES ESSENTIELLES ENTRE SUSPENSIONS

### A. DUBONNET ET CONTRACTIVE

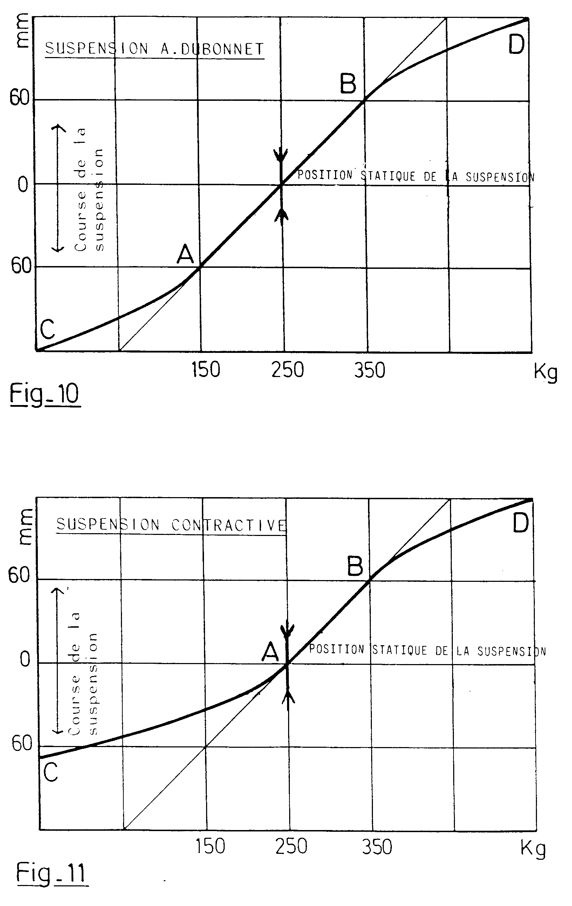

De manière à mettre en évidence la différence essentielle entre la suspension DUBONNET FR-A-829.453 et la suspension selon l'invention, il faut faire une simulation chiffrée des caractéristiques des deux suspensions ; à cet effet, il y a lieu de se reporter aux figures 10 et 11.

A cet effet, on suppose que la charge en position statique du véhicule est de 250 kg, que la flexibilité la plus faible sera de 20 %, alors que la flexibilité la plus grande sera de 60% et il est fait abstraction, pour cet exemple, de l'effet des barres anti-devers.

### SUSPENSION A.DUBONNET

Ainsi, suivant la technique décrite par ce concept, il est possible de suposer que le ressort précontraint a été réglé avec 150 kg de précontrainte. Il existe ainsi un premier point de basculement des flexibilités A à 150 kg, alors que le point de basculement B est à 350 kg.

### SUSPENSION CONTRACTIVE

La caractéristique technique essentielle du procédé de suspension selon l'invention impose de fixer le point de basculement A à une valeur très proche de la charge équivalente à la position statique du véhicule (suivant les caractéristiques souhaitées, comportement sportif, normal ou grand confort, la précontrainte du ressort sera déterminée par la mise au point : tantôt exactement à la valeur équivalente à la charge statique, tantôt avec une précontrainte un peu augmentée pour forcer le comportement sportif, tantôt avec une précontrainte légèrement diminuée pour favoriser le confort).

De cette façon, dans cet exemple, le ressort précontraint sera réglé à 250 kg, il existe ainsi un premier basculement de flexibilité A à 250 kg, alors que le point de basculement B est à 350 kg.

### SUSPENSION CLASSIQUE

Le véhicule de référence pourvu de suspensions classiques a une flexibilité de 50 %, mais linéaire sur toute la course de la suspension.

### RESULTAT AU NIVEAU DE LA TENUE D'ASSIETTE ET DE LA STABILITE DU VEHICULE

Au moment où l'automobile équipée de suspensions A. DUBONNET a à subir une accélération latérale ou longitudinale qui amène les suspensions à la limite des points de basculement A et B, il est possible de mesurer une déflexion de la suspension en appui de 60 m/m, alors que la suspension qui est délestée a à subir un déjaugeage de 60 m/m.

Au total, le roulis (ou le tangage) atteint alors 60+60 = 120 m/m.

Soumise à la même accélération, l'automobile, qui est équipée d'une suspension selon l'invention, accuse une déflexion de la suspension en appui de 60 m/m alors que le déjaugeage de la suspension qui se trouve délestée est limité à 20 m/m soit un roulis (ou tangage) total de 80 m/m d'une suspension sur l'autre ne réduise encore un peu plus le roulis (ou tangage).

Le procédé selon l'invention crée une sorte de "niveau de référence" qui stabilise le véhicule sur les petit roulis (ou tangage), la manifestation la plus spectaculaire étant la supression quasi totale du "coup de raquette" qui provoque tellement de sorties de route (un véhicule s'embarque d'un côté de la route, puis brutalement s'embarque du côté opposé avec une violence redoublée qui, très fréquemment, reste impossible à contrôler) ; enfin, l'alternance des deux fréquences apporte un auto-amortissement.

La voiture de référence, soumise à la même accélération et équipée de suspensions classiques, accuse une déflexion de la suspension en appui de 50 m/m, alors que la suspension qui se trouve délestée subit un déjauguage de 50 m/m, soit un roulis (ou tangage) de 50 + 50 = 100 m/m.

En résumé :
la suspension selon l'invention apporte :
- absorption verticale améliorée (60 % de flexibilité)
- roulis ou tangage réduits (80 m/m)
- meilleure stabilité (par création d'un niveau de référence)
- auto-amortissement (par alternance de deux fréquences)

### A. DUBONNET :

- absorption verticale améliorée (60 % de flexibilité)
- roulis ou tangage augmenté (120 m/m)
- détérioration de la stabilité
- auto-amortissement (par alternance des deux fréquences, mais uniquement sur les grands débattements)

### SUSPENSION CLASSIQUE :

- absorption verticale moins bonne (50 % de flexibilité)
- roulis ou tangage moyens (100 m/m)
- stabilité moyenne
- pas d'auto-amortissement (absence de deux fréquences)

Cette étude comparative, de la suspension DUBONNET et de la suspension MAURO BIANCHI, met en évidence le résultat nouveau et surprenant du procédé de suspension selon l'invention.

## Revendications

1. Suspension de roue de véhicule comportant :
- un élément amortisseur (7) disposé entre la roue et le châssis du véhicule ;
- un premier ressort (R20) disposé entre une coupelle (32) et le châssis et un second ressort (R30) disposé entre ladite coupelle (32) et la roue du véhicule ;
- une première butée supérieure (31) et une seconde butée inférieure (33) disposées sur le corps (6) de l'amortisseur (7) de façon à limiter la course de la coupelle (32) ;
- un moyen élastique (54,55) disposé entre chaque butée et la coupelle (32), de façon à rendre progressive l'élimination d'un des deux ressorts (R20,R30) montés en série lorsque ladite coupelle (32) vient se mettre en appui contre l'une des butées, la distance entre les deux butées (31,33) détermine une course précise de la coupelle (32), ladite course définissant, sur la course de suspension, une "zone de confort" où la raideur est plus faible que sur les courses restantes ;
caractérisée par le fait
- que la seconde butée (33) de la coupelle (32) est montée solidaire d'une chemise mobile (4) d'un vérin annulaire (5) sur le corps (6) de l'amortisseur (7),
- que la chemise mobile (4) est rappelée par un ressort de rappel (11) prenant appui sur la première butée (31),
- et qu'une commande hydraulique actionne le vérin annulaire (5), la "zone de confort" étant réglable en réglant la distance entre les deux butées.

2. Suspension selon la revendication 1, caractérisé par le fait
qu'il est disposé une seconde cale en élastomère (55) entre la seconde butée ou appui (33) de la coupelle et la coupelle (32).

3. Suspension selon la revendication 2, caractérisé par le fait
que l'alimentation du vérin annulaire (5) se fait par un canal (8) présentant un filetage de raccordement (9) sous la coupelle inférieure (10) du ressort (R30).

4. Suspension selon la revendication 3 caractérisé par le fait
que la commande hydraulique, qui agit sur le vérin annulaire (5) sur lequel est montée la seconde butée (33), est asservie à un calculateur qui reçoit des informations de différents capteurs.

## Claims

1. A vehicle wheel suspension comprising:
- a damping element (7) fitted between the wheel and the vehicle chassis;
- a first spring (R20) fitted between a spring plate (32) and the chassis and a second spring (R30) arranged between the said spring plate (32) and the vehicle wheel;
- a first upper stop (31) and a second lower stop (33) fitted on the body (6) of the damping element (7) so as to limit the travel of the spring plate (32);
- elastic means (54, 55) arranged between each stop and the spring plate (32) so as to eliminate progressively one of the two springs (R20, R30) fitted in series when the said spring plate (32) taking its bearing on one of the stops, the distance between the two stops (31, 33) determines the precise travel of the spring plate (32), the said travel delimiting a "range of comfort" on the suspension travel, where the stiffener is less stiff than on the remaining travel; wherein
- the second stop (33) of the spring plate (32) is fitted so as to form an integral part with the mobile sleeve (4) of an annular hydraulic cylinder (5) on the casing (6) of the damper (7),
- the mobile sleeve (4) return movement is actuated by a return spring (11) which takes its bearing on the first stop (31),
- and a hydraulic control actuates the annular hydraulic cylinder (5), the "range of comfort" being adjustable by controlling the distance between the two stops.

2. A suspension as per claim 1, wherein:
- a second elastomer shim (55) is installed between the second stop or bearer (33) of the spring plate and the spring plate (32).

3. A suspension as per claim 2, wherein;
- supply to the annular hydraulic cylinder (5) is through a line (8) with a connecting thread (9) under the lower spring plate (10) of the spring (R30).

4. A suspension as per claim 3, whirring:
- the hydraulic control which acts on the annular hydraulic cylinder (5) on which is fitted the second stop (33), is triggered by a computer which receives the data from the different sensors.

## Patentansprüche

1. Aufhängung für ein Kraftfahrzeugrad mit:
- einem zwischen dem Rad und dem Fahrzeugchassis angeordneten Stoßdämpferelement (7), einer zwischen einem Teller (32) und dem Chassis angeordneten ersten Feder (R20) und einer zwischen dem Teller (32) und dem Fahrzeugrad angeordneten zweiten Feder (R30),
- einem ersten, oberen Anschlag (31) und einem zweiten, unteren Anschlag (33), die am Körper (6) des Stoßdämpfers (7) angeordnet sind, um den Weg des Tellers (32) zu begrenzen,
- jeweils einer elastischen Einrichtung (54, 55), die zwischen jedem Anschlag und dem Teller (32) angeordnet ist, um eine der zwei in Reihe montierten Federn (R20, R30) allmählich unwirksam zu machen, wenn der Teller (32) an einem der Anschläge zu liegen kommt, wobei der Abstand zwischen den zwei Anschlägen (31, 33) einen genauen Hub des Tellers (32) bestimmt und dieser Hub im Hub der Aufhängung einen "Komfortabschnitt" definiert, in dem die Steifigkeit geringer als in den restlichen Hüben ist,
dadurch gekennzeichnet, daß
- der zweite Anschlag (33) des Tellers (32) mit einem beweglichen Mantel (4) eines Ringkolbens (5) am Körper (6) des Stoßdämpfers (7) fest verbunden montiert ist,
- der bewegliche Mantel (4) durch eine Rückstellfeder (11) zurückgestellt wird, die am ersten Anschlag (31) abgestützt ist,
- und daß eine hydraulische Steuerung den Ringkolben (5) betätigt, wobei der "Komfortabschnitt" durch Regeln des Abstandes zwischen den zwei Anschlägen regelbar ist.

2. Aufhängung nach Anspruch 1, dadurch gekennzeichnet, daß ein zweiter Elastomerkeil (55) zwischen dem zweiten Anschlag (33) des Tellers und dem Teller (32) angeordnet ist.

3. Aufhängung nach Anspruch 2, dadurch gekennzeichnet, daß die Versorgung des Ringkolbens (5) durch einen Kanal (8) verläuft, der ein Anschlußgewinde (9) unter dem unteren Teller (10) der Feder (R30) aufweist.

4. Aufhängung nach Anspruch 3, dadurch gekennzeichnet, daß die hydraulische Steuerung, die auf den Ringkolben (5) einwirkt, an dem der zweite Anschlag (33) montiert ist, durch einen Rechner gesteuert wird, der Informationen von verschiedenen Meßaufnehmern empfängt.
